(19) Europäisches Patentamt
European Patent Office
Office européen des brevets

(11) **EP 1 303 089 A1**

(12) **EUROPEAN PATENT APPLICATION**
published in accordance with Art. 158(3) EPC

(43) Date of publication:
**16.04.2003 Bulletin 2003/16**

(51) Int Cl.⁷: **H04L 12/56**

(21) Application number: **02712333.0**

(22) Date of filing: **14.02.2002**

(86) International application number:
**PCT/JP02/01217**

(87) International publication number:
**WO 02/065710 (22.08.2002 Gazette 2002/34)**

(84) Designated Contracting States:
**AT BE CH CY DE DK ES FI FR GB GR IE IT LI LU MC NL PT SE TR**

(30) Priority: **14.02.2001 JP 2001036529**

(71) Applicant: **MATSUSHITA ELECTRIC INDUSTRIAL CO., LTD.**
**Kadoma-shi, Osaka 571-8501 (JP)**

(72) Inventors:
• **HIRATA, Yoshimitsu**
**Ibaraki-shi, Osaka 567-0828 (JP)**
• **TSUJI, Seiji**
**Ibaraki-shi, Osaka 567-0009 (JP)**
• **AGUSA, Reiji**
**Ibaraki-shi, Osaka 567-0813 (JP)**
• **IWAHARA, Takashi**
**Takatsuki-shi, Osaka 569-0076 (JP)**

(74) Representative: **Gassner, Wolfgang, Dr.**
**Patentanwalt,**
**Nägelsbachstrasse 49a**
**91052 Erlangen (DE)**

(54) **DIGITAL CONTENT DISTRIBUTION SYSTEM AND ITS APPARATUS**

(57) In a digital content distribution system (Dcp) in which digital content data (D) is exchanged under distribution conditions respectively set to transmission paths (L1-Ln, Lm) commonly available between a terminal device and a distribution device, the terminal device (12p) reports to the distribution apparatus (11p) the available transmission paths (L1-Ln). The distribution apparatus (11p) detects the state of each of the reported transmission paths (L1-Ln) for respectively setting the distribution conditions thereto.

*Fig. 1*

| Signal | Information to be exchanged | Direction |
|--------|----------------------------|-----------|
| Rp | Distribution Request Information (Available Infrastructure Information) | 11p ← 12p |
| Pp | Present Distribution Conditions For Every Distribution Type | 11p → 12p |
| Spt | Preselected Distribution Content Order Information (Select Distribution Type, and Order) | 11p ← 12p |
| Apt | Preselected Distribution Order Reception Information (Distribution Schedule) | 11p → 12p |
| L c | Allocated Distribution Transmission Path | 11p ← 12p |
| D | Content | 11p → 12p |

Ipt

Ipt
( p, pp, Spt, Apt)

La

D

Dcp

11p — Content Distribution Apparatus

12p — Terminal Device

D

Lb

Ip (Ap)

**Description**

TECHNICAL FIELD

The present invention relates to a digital content distribution system for distributing a digital content to a user via a plurality of transmission paths and, more specifically, a digital content distribution system for distributing a digital content on a condition set according to a user's selection for every transmission path to be used.

BACKGROUND ART

In recent years, digital content distribution systems have been commercially available for providing users with a digital content not as a packaged medium but via a online transmission path typified by the Internet, etc. On the Internet, numerous transmission paths having various features are provided, offering an environment that makes it possible to configure a digital content distribution system commonly available between users and digital content providers.

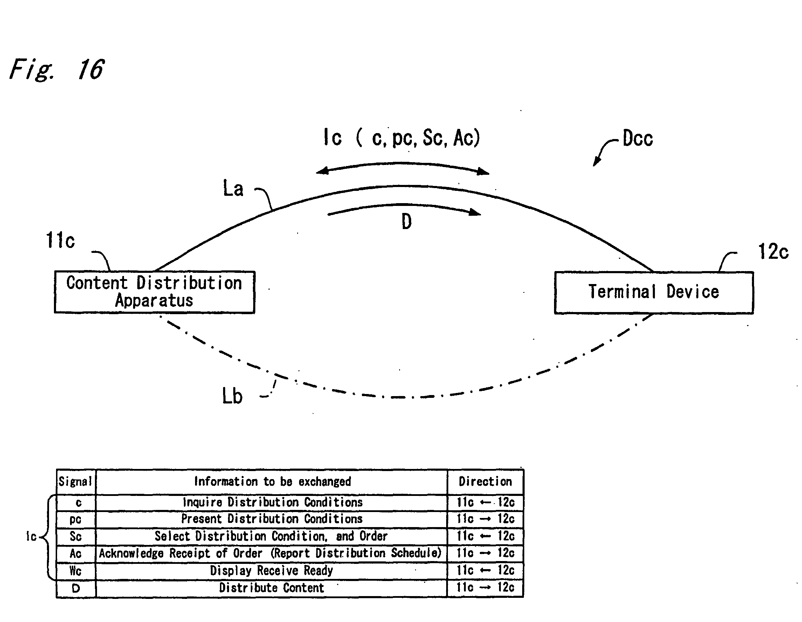

Illustrated in FIG. 16 is one example of a conventional digital content distribution system that has been commercially available on the Internet (hereinafter abbreviated as "distribution system"). As illustrated in the drawing, a conventional distribution system DCc is constructed by a content distribution apparatus (hereinafter abbreviated as "distribution apparatus") 11c that serves as a providing source in which a provider of digital contents (hereinafter abbreviated as "contents") stores contents and that is used for storage and distribution; a terminal device 12c that is operated by a user for requesting provision of a desired content; and a'single transmission path L formed on the Internet for connecting therebetween.

As described above, the distribution apparatus 11c can use a plurality of transmission paths L1 through Lm (m is an arbitrary integer), and similarly the terminal device 12c can use a plurality of transmission paths L1 through Ln (n is an arbitrary integer). Each of the plurality of transmission paths L1 through Ln has various usage conditions set thereto in detail, such as a transmission speed or a usage fee for every time zone, for example. Under such circumstances, a case where the distribution apparatus 11c and the terminal device 12c can commonly use at least two transmission paths La and Lb (1 < a < b < m, b < n) is specifically described. Note that, as required for the sake of convenience in description, the transmission path La is hereinafter called a first transmission path, and the transmission path Lb is called a second transmission path.

The first transmission path La and the second transmission path Lb have different use conditions set thereto. Therefore, the user uses either the transmission paths La or Lb that has a use condition(s) most convenient at the time of connection for requesting content distribution. For example, when the user uses the first transmission path La for requesting content distribution, the distribution apparatus 11c does not know that the second transmission path Lb is also available to the user, and therefore content distribution is made consequentially via the first transmission path La. To illustrate this relation in FIG. 16, the first transmission path La is represented as a solid line, while the second transmission path Lb as a one-dot chain line.

In the above-described content distribution system, the distribution apparatus 11c uses the first transmission path La in response to a distribution. request Cc from the user to distribute a content D to the user. However, the transmission paths are not limited to the first transmission path La and the second transmission path Lb, and a larger plurality of transmission paths L are shared by numerous users or distribution apparatuses. As a result, in such a digital content distribution system, distribution requests from numerous users are enormously overlapped with one another, thereby resulting in traffic congestion in the digital content distribution apparatus 11c or on a specific transmission path L (the first transmission path La, in the present example).

In such a congestion state, if a new content distribution request Cc issued from the user is received, the following inconvenience will occur in both the distribution apparatus 11c and the terminal device 12c. That is, the distribution apparatus 11c cannot instantly distribute the requested content. At the terminal device 12c (user) side, it is impossible not only to receive content distribution immediately after the request, but also to know when the content will be distributed. Therefore, the user has to unforeseeably wait for the content to be distributed without knowing when it comes. This is extremely undesirable in view of efficient use of time and the transmission path, and economical burden.

To improve such situations, suggested in Japanese Patent Laid-Open Publication No. 10-66053 is a digital content distribution system in which only instant distribution is performed, meaning that distribution is instantly performed in receipt of the content distribution request Cc from the user, but not preselected distribution where distribution is performed after a predetermined time elapses. Further suggested in Japanese Patent Laid-Open Publication No. 10-13816 is a digital content system in which, if a content distribution apparatus falls into a congestion state after receiving a distribution request, the congestion state is reported to the user and the user is prompted to change from instant distribution to preselected distribution.

However, the former preselected distribution is inconvenient for users who desire to immediately obtain a digital content. Furthermore, in the latter case where a change is made from instant distribution to preselected distribution at the time of congestion, instant distribution is also applied to users who do not mind preselected distribution from the beginning of the request. This is also not preferable in view of use efficiency of the content distribution apparatus and the transmission path.

Different conditions can be set to the plurality of transmission paths L1 through Ln commonly available between the user (terminal device 12c) and the content provider (distribution apparatus 11c). Of the common plurality of transmission paths L1 through Ln, when the user (terminal device 12c) is connected to the content provider (distribution apparatus 11c), some paths are suitable for exchanging small-sized data of requesting/receiving content distribution, and others are suitable for distributing contents large in size. Furthermore, to average loads on resources of the content distribution system and effective use thereof, it is highly preferable that various distribution conditions can be set according to the degree of the congestion state in the distribution apparatus 11c at a content distribution time desired by the user or in the transmission path L to be used for distribution.

In accordance with distribution types respectively corresponding to various distribution conditions, it is also preferable to distinctively set loads on the distribution system and fees to be paid by users. Conventionally, however, even under the circumstances where the plurality of transmission paths L1 through Ln commonly available between the distribution apparatus 11c and the terminal device 12c exist, the user can only choose either instant distribution or preselected distribution with respect to only the transmission path L used when the user connects the terminal device 12c to the distribution apparatus 11c.

Therefore, an object of the present invention is to provide a digital content distribution system in which distribution types and distribution conditions are set to a plurality of transmission paths commonly available between a content provider and a user, and the user can receive digital content distribution with arbitrarily-selected ones of the set distribution types and distribution conditions.

DISCLOSURE OF THE INVENTION

To achieve the above object, the present invention has the following aspects.

A first aspect of the present invention is directed to a digital content distribution system in which a digital content is exchanged between a first digital transmitting and receiving device capable of transmitting and receiving digital data via a first plurality of transmission routes and a second digital transmitting and receiving device capable of transmitting and receiving the digital data via a second plurality of transmission routes, the first digital transmitting and receiving device comprising:

a first transmission path identification information generating section for generating first transmission path identification information indicating each of the first plurality of transmission paths; and
a first transmitting section for transmitting the first transmission path identification information to the second digital transmitting and receiving device via an arbitrary one of the first plurality of transmission paths, and
the second digital transmitting and receiving means including:

a second transmission path identification information generating section for generating second transmission path identification information by detecting transmission paths common to the first plurality of transmission paths in the second plurality of transmission paths based on the first transmission path identification information; and
a distribution condition setting section for setting a distribution condition of the digital content to each of the common transmission paths.

As described above, in the first aspect, digital content distribution is possible under the distribution conditions respectively set to the transmission paths commonly available between transmitting and receiving sides.

According to a second aspect of the present invention, in the first aspect, the second digital transmitting and receiving device includes
a send-out information managing section for managing send-out information including, for each of the common transmission paths, a distribution band, a distribution time, and a distribution delay time of the digital content to be distributed;
an on-demand distribution determining section for comparing the send-out information with a threshold; and
a distribution request processing section for transmitting, based on the comparison result information, a plurality of timing types for distributing the digital content and distribution billing information for each of the common transmission paths.

According to a third aspect of the present invention, in the second aspect, the send-out information managing section determines whether instant distribution of the digital content is possible over the common transmission paths.

BRIEF DESCRIPTION OF THE DRAWINGS

FIG. 1 is a schematic diagram illustrating the configuration of a digital content distribution system according to an embodiment of the present invention, and a flow of information at the time of preselected distribution.

FIG. 2 is a schematic diagram illustrating a flow of information at the time of instant distribution in the digital content distribution system illustrated in FIG. 1.

FIG. 3 is a block diagram schematically illustrating the construction of a terminal device illustrated in FIG. 1.

FIG. 4 is an illustration for describing preselected distribution order information to be exchanged between a distribution apparatus and the terminal device in the digital content distribution system illustrated in FIG. 1.

FIG. 5 is a block diagram schematically illustrating the construction of the distribution apparatus shown in FIG. 1.

FIG. 6 is an illustration for describing transmission path interface management information generated by a transmission state managing section of FIG. 5.

FIG. 7 is an illustration for describing content distribution condition information for preselected distribution, where the information is managed by the distribution destination managing section of FIG. 5.

FIG. 8 is an illustration for describing content distribution condition information for instant distribution, where the information is managed by the distribution destination managing section of FIG. 5.

FIG. 9 is an illustration for describing distribution thresholds managed by a threshold holding section of FIG. 5.

FIG. 10 is an illustration for describing client information managed by a client information managing section of FIG. 5.

FIG. 11 is an illustration for describing distribution information managed by a content information managing section of FIG. 5.

FIG. 12 is an illustration for describing client billing information managed by a billing managing section of FIG. 5.

FIG. 13 is a sequence chart illustrating a content distribution operation in the digital content distribution system illustrated in FIG. 1.

FIG. 14 is an illustration showing one example of a distribution scheme list displayed on a distribution condition checking section of FIG. 3.

FIG. 15 is an illustration showing one example of a request ID and a transmission path identifier managed by a preselection information managing section of FIG. 3.

FIG. 16 is a block diagram schematically illustrating the configuration of a conventional digital content distribution system.

BEST MODE FOR CARRYING OUT THE INVENTION

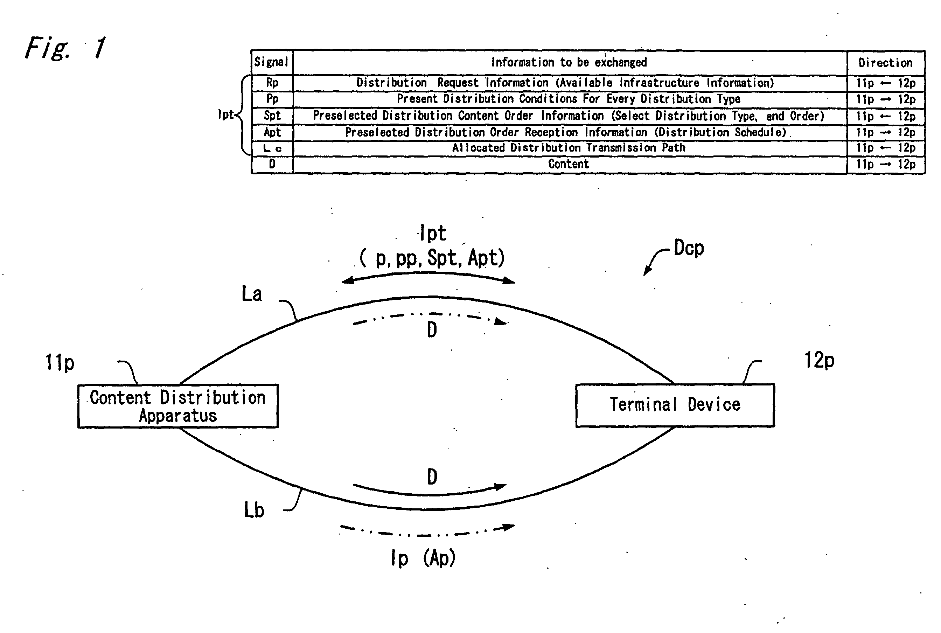

The present invention is described in more detail according to the attached drawings. Before describing in detail a distribution system according to an embodiment of the present invention, a basic concept of the distribution system according to the present invention is described by referring to one example of a digital content distribution system (hereinafter abbreviated as "distribution system") according to the embodiment illustrated in FIG. 1. As illustrated in the drawing, a distribution system DCp according to the present invention is similar to the conventional conventional distribution system DCc illustrated in FIG. 16. In the distribution system DCp, however, the distribution apparatus 11c and the terminal device 12c in the distribution system DCc are replaced with a distribution apparatus 11p and a terminal device 12p.

Furthermore, in the distribution system DCc, the distribution apparatus 11c and the terminal device 12c are connectable via the plurality of transmission paths L (the first transmission path La and the second transmission path Lb). However, only a single transmission path L (first transmission path La) is used for the distribution of the content D. In the distribution system DCp, on the other hand, the distribution apparatus 11p and the terminal device 12p are connectable via a plurality of transmission paths L (first transmission paths La and the second transmission path Lb), which is similar to the distribution system DCc. In the distribution system DCp, however, all of the plurality of transmission paths L (the first transmission path La and the second transmission path Lb) can be used with distribution types set to the respective transmission paths fro the distribution of the content D.

Therefore, a content provider (distribution apparatus 11p) has to know all transmission paths L commonly available between itself and a user (terminal device 12p). For this reason, at least when connecting to the content provider (distribution apparatus 11p) for requesting content distribution, the user (terminal device 12p) reports to the provider (distribution apparatus 11p) all transmission paths L1 through Ln available to the user (terminal device 12p). Then, of all transmission paths L1 through Ln reported by the user (terminal device 12p), for every transmission path L commonly available between the user and the content provider (first transmission path La and the first transmission path Lab), the content provider (distribution apparatus 11p) presents to the user (terminal device 12p) various distribution types of the content D and distribution conditions corresponding thereto. The user selects desired ones of the presented distribution types and distribution conditions, and receives distribution of the content D with the selected type and condition.

As described above, in the distribution system DCp according to the present invention, a main difference between the conventional distribution apparatus 11c and terminal device 12c is that at least the distribution apparatus 11p recognizes that the distribution apparatus 11p (content provider) and the terminal device 12p (user) can commonly use the first transmission path La and the second transmission path Lb with different use conditions from each other. Preferably, for actual distribution of the content D, the distribution apparatus 11p and the terminal device 12p recognize the transmission paths L commonly available therebetween. Briefly described below are operations in the distribution system DCp for requesting content distribution, receiving the content distribution request, and distributing the content.

Also in the present invention, the user operates the terminal device 12p for using either one of the first transmission path La and the second transmission path Lb that is most convenient in use condition for connection to the distribution apparatus 11p, and requests content distribution. In this case, however, the user transmits, to the distribution apparatus 11c, distribution request information Rp including available transmission path information Ii indicating all transmission paths L available to the terminal device 12p. In this example, the transmission paths L indicated by the available transmission path information Ii includes at least the first transmission path La and the second transmission path Lb. Needless to say, however, in the present invention, when the user can use a plurality of terminal devices 12p, all transmission paths L available via these plurality of terminal devices 12p are indicated.

Based on the distribution request information Rp, with respect to the content desired by the user or the content D providable by the distribution apparatus 11p, the distribution apparatus 11p transmits, to the terminal device 12p, distribution condition information Pp representing the distribution conditions set to various distribution types with respect to the first transmission path La and the second transmission path Lb available to the distribution apparatus 11p out of the transmission paths L indicated by the available transmission path information Ii. The distribution condition information Pp includes a distribution time such as instant distribution or preselected distribution, the first transmission path La and the second transmission path Lb, and a content distribution fee for each combination of the distribution time and the transmission path for use. Note that the distribution apparatus 11p actually checks the state of congestion in the transmission paths indicated by the available transmission path information Ii included in the distribution request information Rp.

Then, the distribution apparatus 11p appropriately sets the distribution time according to the checked state of congestion and the state of processing loads of distribution requests already received. Note that, in this sense, distribution within a predetermined time period Tp subsequent to receipt of a request is called instant distribution; distribution at a predetermined time after the predetermined time period Tp subsequent to receipt of a request is called preselected distribution; and distribution at a undetermined time after the predetermined time period Tp subsequent to receipt of a request is called delayed distribution. Preferably, for instant distribution in the present invention, with connection between the terminal device 12p and the distribution apparatus 11p is not cut off between a time from distribution request to receipt of content distribution, and the transmission path L used for the distribution request is also used for content distribution.

For preselected distribution and delayed distribution, on the other hand, connection between the terminal device 12p and the distribution apparatus 11p is cut off between a time from distribution request to receipt of content distribution, and a transmission path L (second transmission path Lb), that is different from the transmission path L used for the distribution request (first transmission path La), is presumed to be used for content distribution. Note that, for instant distribution in the present invention, distribution request and content distribution may be performed by using different transmission paths L for connection. Also, for preselected distribution and delayed distribution, distribution request and content distribution may be performed by using the same transmission path L for connection. Furthermore, needless to say, if the same transmission path L is used, connection does not have to be cut off.

Based on the distribution condition information Pp transmitted from the distribution apparatus 11p, the terminal device 12p presents to the user the distribution conditions each including the content distribution fee, etc., set for each distribution type in combination with the distribution time with respect to the plurality of transmission paths L available to the user (in the present example, the first transmission path La and the first transmission path La). The user operates the terminal device 12p to select an agreeable one(s) of the presented conditions (distribution condition information Pp), generates content order information Sp indicating an order of the content, and transmits it to the distribution apparatus 11p. The content order information Sp includes at least information defining the content, transmission path (either one of the first transmission path La and the second transmission path Lb), and distribution timing that have been selected by the user. Note that, as described above, the distribution timing includes at least two types, preselected distribution and instant distribution.

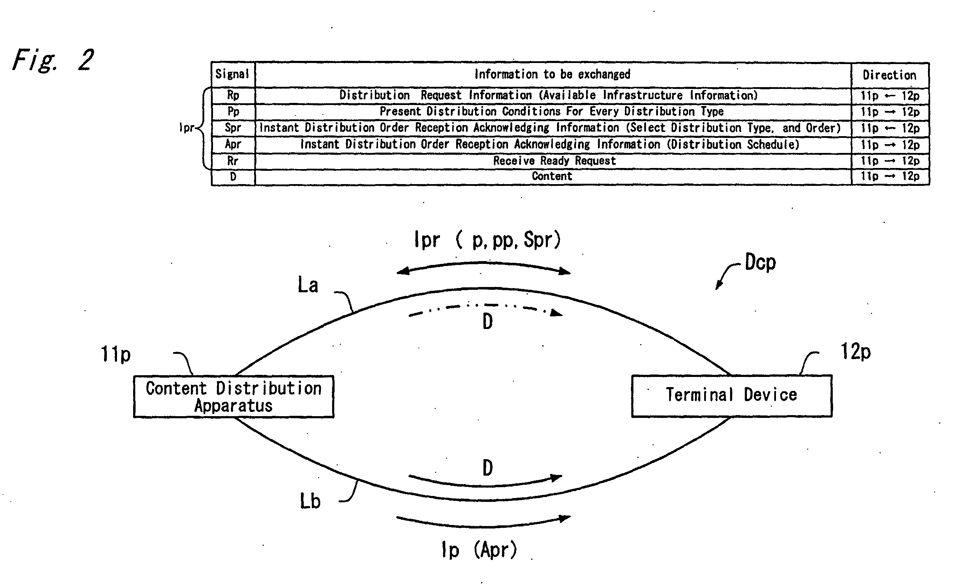

In the present invention, preselected distribution (including delayed distribution) and instant distribution are different in the subsequent processing. Therefore, the content order information Sp for preselected distribution (including delayed distribution) and the one for instant distribution are identified as preselected distribution order information Spt and instant distribution order information Spr, respectively, as required. Note that, illustrated in the above-described FIG. 1 is a flow of information and data in the distribution system DCp for preselected distribution, and illustrated in FIG. 2 is a flow of information and data in the distribution system DCp for instant distribution.

For preselected distribution, as illustrated in FIG. 1, the user operates the terminal device 12p to generate preselected distribution order information Spt for transmission to the distribution apparatus 11p. Based on the preselected distribution order information Spt, the distribution apparatus 11p generates preselected distribution order reception information Apt for acknowledging receipt of the preselected distribution order of the content selected by the user, and transmits it to the terminal device 12p. The preselected distribution order reception information Apt includes at least the content to be distributed, the transmission path L for use (second transmission path Lb, in this example), and a scheduled distribution time Tt. Note that the above-described distribution request information Rp, the distribution condition information Pp, the preselected distribution order information Spt, and the preselected distribution order reception information Apt are collectively called preselected distribution order and order reception information Ipt. (Instant distribution order and order reception information Ipr, preselected distribution order and order reception information Ipt, and instant distribution order and order reception information Ipr are collectively called content order and order reception information Ip.)

Then, when the scheduled distribution time selected by the user comes, upon receiving distribution transmission path allocation confirmation Lc from the terminal device 12p, the distribution apparatus 11p confirms that the transmission L selected by the user has been allocated, and then distributes the content selected by the distribution transmission user via the transmission path L selected by the user. Note that, in the present example, the user exchanges the preselected distribution order and order reception information Ipt by using the first transmission path La to order the content D. Then, at the scheduled time after the order, the content D is distributed through the second transmission path Lb. Needless to say, however, according to various conditions the first transmission path La and the second transmission path Lb are selectively used for each of the distribution request information Rp, the distribution condition information Pp, the preselected distribution order information Spt, and the preselected distribution order reception information Apt that form the preselected distribution order and order reception information Ipt.

Processing for instant distribution is identical to that for the above-described preselected distribution until the distribution condition information Pp is transmitted from the distribution apparatus 11p to the terminal device 12p, but different therefrom in the subsequent processing, in which the user then operates the terminal device 12p to generate not preselected distribution order information Spt but instant distribution content order information Spr based on the distribution condition information Pp. That is, based on the instant distribution content order information Spr, the distribution apparatus 11p generates instant distribution order reception confirmation information Apr for transmission to the terminal device 12p. Like the preselected distribution order reception information Apt, the instant distribution order reception confirmation information Apr includes at least the content to be distributed and the transmission path L for use (first transmission path La)).

However, based on an instant distribution request included in the instant distribution content order information Spr, the distribution apparatus 11p generates a receive Ready request Rr instead of the scheduled distribution time Tt for transmission to the terminal device 12p. The receive Ready request Rr is a signal for requesting the user to connect the terminal device 12p to the transmission path L to be used for content distribution (second transmission path Lb, in the present example) for preparing content reception.

Then, in response to the reception Ready request Rr, when reception of the content D is ready with connection to the selected transmission path L (second transmission path Lb, in the present example) having been allocated, the terminal device 12p transmits a receive ready signal Wr to the distribution apparatus 11p via the transmission path L allocated for connection (second transmission path Lb). In response to the reception ready signal Wr, the distribution apparatus 11p uses the transmission path L allocated for connection (second transmission path Lb, in the present example) for transmitting the content D to the terminal device 12p.

Note that the above-described distribution request information Rp, distribution condition information Pp, instant distribution content order information Spr, and instant distribution order reception confirmation information Apr for instant distribution are collectively called instant distribution order and order reception information Ipr. Also, the preselected distribution order and order reception information Ipt and the instant distribution order and order reception information Ipr are collectively called content order and order reception information Ip.

Then, the distribution request information Rp, the distribution condition information Pp, the instant distribution content order information Spr, and the instant distribution order reception confirmation information Apr of the instant distribution order and order reception information Ipr are exchanged by using the first transmission path La for ordering the content D. Then, by using the second transmission path Lb, the reception ready Wr and the content D are exchanged. However, as is the case of the above-stated preselected distribution, the first transmission path La and the second transmission path Lb may be selectively used according to the various conditions for each of the distribution request information Rp, the distribution condition information Pp, the instant distribution content order information Spr, the instant distribution order reception confirmation information Apr, and the reception ready Wr that form the instant distribution order and order reception information Ipr.

Furthermore, the same transmission path L may be used for exchanging the instant distribution order and order reception information Ipr and distributing the content D. That is, in the present invention, of the plurality of transmission paths commonly available between the distribution apparatus 11p and the terminal device 12p and having different distribution conditions set thereto, the user can arbitrarily select one of the transmission paths L for use according to the respective conditions.

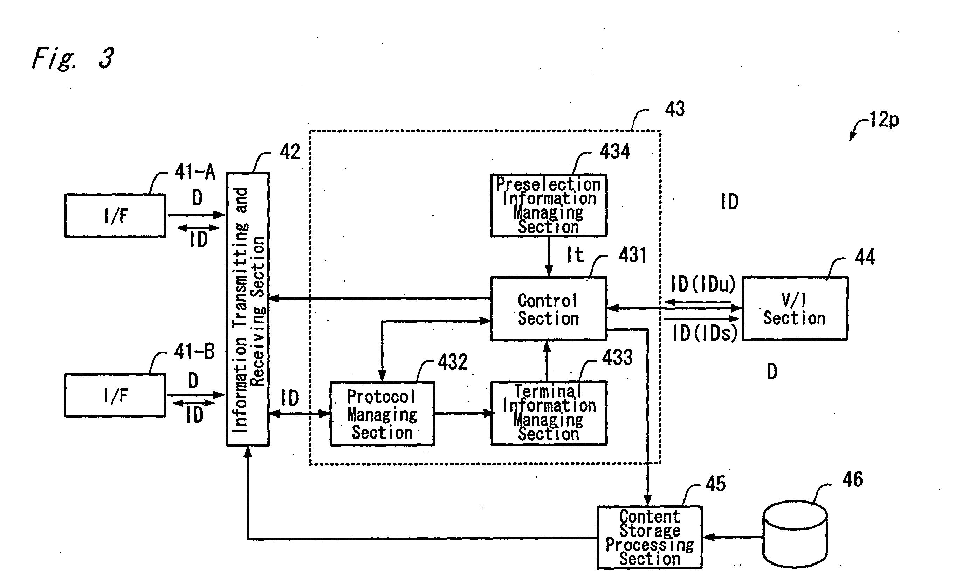

Illustrated in FIG. 3 is the construction of the terminal device 12p. The terminal device 12p includes a first transmission path interface 41-A, a second transmission path interface 41-B, an information transmitting and receiving section 42, a distribution request processing section 43, a distribution condition checking section 44, a content storage processing section 45, and a content holding section 46. The content holding section 46 stores the digital content D distributed from the distribution apparatus 11p, and also outputs the stored content D to a predetermined means such as a display device.

The distribution condition checking section 44 preferably includes a display means such as a monitor and an input means such as a keyboard, and is used by the user to request the distribution apparatus 11p to distribute the content D. That is, the distribution condition checking section 44 exchanges, based on the operation of the user, preselected distribution order and order reception information Ipt including various information related to the distribution apparatus 11 and distribution of the user-desired content, with the distribution apparatus 11p via the distribution request processing section 43, the information transmitting and receiving section 42, the first transmission path interface 41-A, and the second transmission path interface 41-B.

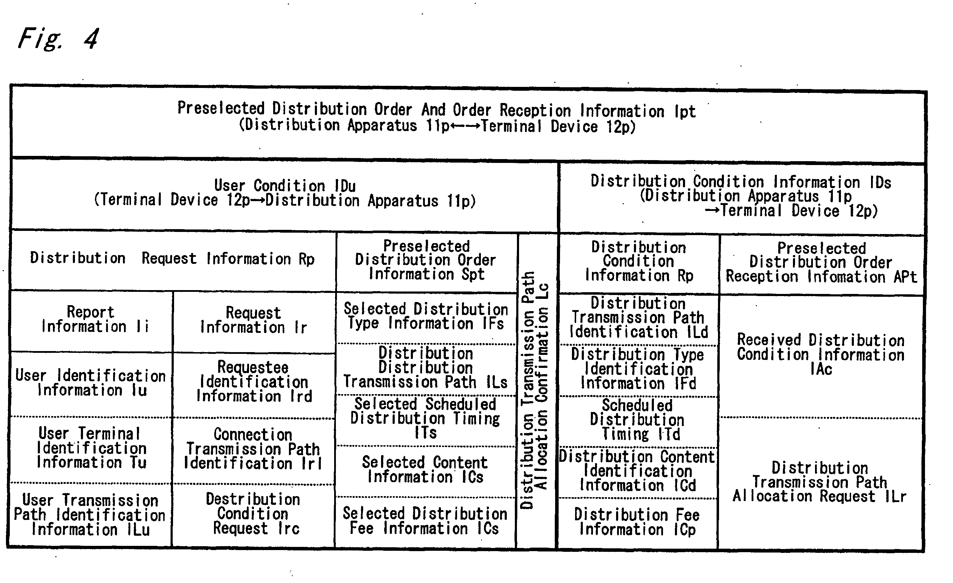

As illustrated in FIG. 4, the preselected distribution order and order reception information Ipt is broadly divided into three types of information: a user condition IDu to be reported or requested from the user to the content provider, distribution condition information IDs indicating content provision conditions presented to the user by the content provider, and the distribution transmission path allocation confirmation Lc.

The user condition IDu includes the above-stated distribution request information Rp and the preselected distribution order information Spt. The distribution request information Rp includes report information Ii for reporting, from the user to the content provider, information as to the environment of the user himself or herself, and request information Ir for requesting content distribution from the user to the content provider. The report information Ii includes at least user identification information Iu for identifying the user, user terminal identification information Tu for identifying the terminal 12p used by the user, and user transmission path identification information ILu indicating all transmission paths available to the user (hereinafter referred to as "user transmission paths Lu").

The request information Ir includes requestee identification information Ird for identifying the content provider (distribution apparatus 11p) from which the user is inquiring about the content distribution conditions, connection transmission identification information Irl for defining a transmission path to be connected to the content provider (distribution apparatus 11p), and a distribution condition request Irc for requesting the content provider to present the distribution conditions of the distributable contents (available transmission paths L, distribution types, providable contents D, distribution timing, and distribution fees).

The preselected distribution order information Spt includes, of the distribution conditions presented by the distribution apparatus 11p (available transmission paths L, distribution types, providable contents D, distribution timing, and distribution fees), those selected by the user as follows: selected distribution type information IFs indicating the selected distribution type, selected distribution transmission path information ILs indicating the selected transmission path, selected scheduled distribution timing ITs indicating the selected distribution timing, selected content information ICs indicating the selected content to be distributed, and selected distribution fee information ICs indicating the selected distribution fee.

The distribution condition information IDS includes, on the other hand, the distribution request information Rp and the preselected distribution order reception information Apt. The distribution request information Rp indicates details of the content distribution conditions providable from the content provider to the user, and is generated based on the report information Ii outputted from the user. The distribution condition information Pp includes distribution transmission path identification information ILd indicating transmission paths commonly available to the user and the content provider for distribution of the content D, distribution type identification information IFd indicating distribution types available for the respective transmission paths indicated by the distribution transmission path identification information ILd, scheduled distribution timing ITd for the respective distribution types, distribution content identification information ICd indicating the providable contents D, and distribution fee information ICp indicating distribution fees of the contents D for the respective distribution types.

The preselected distribution order reception information Apt is information for confirming the content distribution condition selected by the user, and is generated based on the preselected distribution order information Spt outputted from the user. The preselected distribution order reception information Apt includes, based on the preselected distribution order information Spt, received distribution condition information IAc received before the content provider distributes the content D, and distribution transmission path allocation request ILr. The received distribution condition information IAc is basically the same as the preselected distribution order information Spt. Also, the distribution transmission path allocation request ILr is a signal for requesting the user to confirm, a predetermined time ahead of a scheduled distribution time (selected scheduled distribution timing ITs), that the transmission path to be used for distribution of the content D (selected distribution transmission path information ILs) has been allocated.

Here, prior to detailed description of the internal construction of the terminal device 12p and the distribution apparatus 11p, the above-stated preselected distribution order and order reception information Ipt is exchanged therebetween is briefly described, by taking a case of preselected distribution as an example. To request content distribution, the user first operates the distribution condition checking section 44 for inputting the distribution request information Rp of the above-state user condition IDu to the distribution request processing section 43 to be connected to the desired distribution apparatus 11p for requesting presentation of the content distribution conditions. Based on the distribution request information Rp outputted from the terminal device 12p (user), the distribution apparatus 11p (content provider) generates the distribution condition information Pp, and outputs it to the terminal device 12p. The user checks at the distribution condition checking section 44 the substance of the distribution condition information Pp returned from the distribution apparatus 11p (content provider), and operates the distribution condition checking section 44 to generate preselected distribution order information Spt for transmission again to the distribution apparatus 11p (content provider). Based on the preselected distribution order information Spt transmitted from the terminal device 12p, the content provider generates preselected distribution order reception information Apt for checking the distribution request from the user, and returns the generated information to the terminal device 12p. Then, on the condition that the distribution transmission path allocation confirmation Lc is received, the distribution apparatus 11p distributes the content D with the distribution condition(s) designated by the user.

As illustrated in FIG. 3, the distribution request processing section 43 includes a control section 431, a protocol managing section 432, a terminal information managing section 433, and a preselection information managing section 434. Including these components, the distribution request processing section 43 is described in detail below.

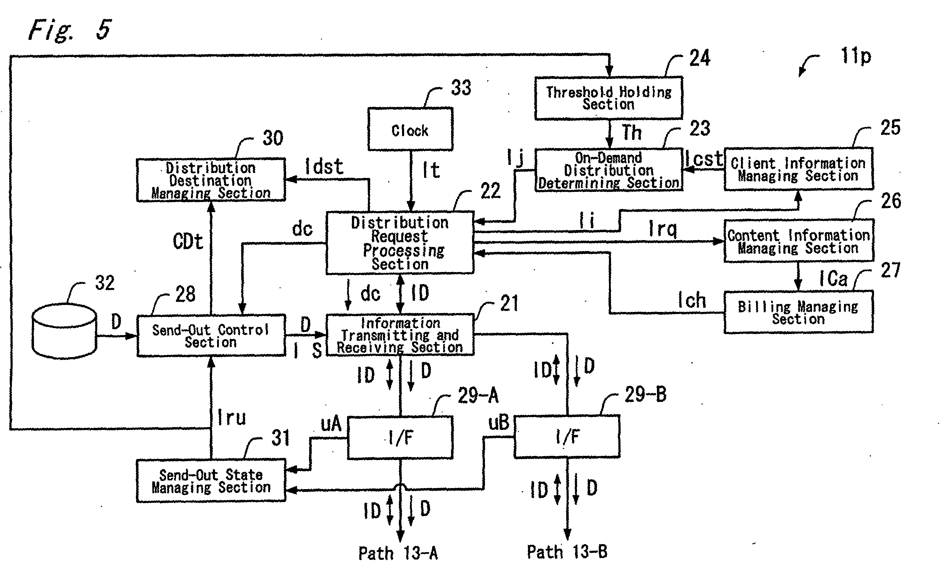

Next, with reference to FIG. 5, described in detail is the above-stated distribution apparatus 11p. The distribution apparatus 11p includes an information transmitting and receiving section 21, a distribution request processing section 22, an on-demand distribution determining section 23, a threshold holding section 24, a client information managing section 25, a content information managing section 26, a billing managing section 27, a send-out control section 28, a first transmission path interface (denoted as "I/F A") 29-A, a second transmission path interface (denoted as "I/F B") 29-B, a distribution destination managing section 30, a send-out state managing section 31, and a content holding section 32.

The content holding section 32 holds and designates various digital contents typified by movies and music, and outputs the requested content D to the send-out control section 28.

The send-out control section 28 controls the operations of the distribution destination managing section 30 and the content holding section 32 based on a distribution request Rdc from the distribution processing section 22 described further below. That is, the send-out control section 28 reads the content D from the content holding section 32 for supply to the information transmitting and receiving section 21. Furthermore, based on the distribution request Rdc, the send-out control section 28 outputs selected communications route information IRS indicating which communications route is used for sending out the content D read from the content holding section 32. The send-out control section 28 calculates a usage rate of the content holding section 32, a distribution time, or a distribution delayed time from the state of sending-out of the content D to be distributed and, based on the state of the calculated usage rate and distribution delayed time, outputs a preselected distribution instruction CDt for causing the distribution destination managing section 30 to perform preselected distribution.

The first transmission path interface 29-A is used as a communications interface using the first transmission path La for calculating a usage rate of a communications route with the network 12-A, and generating a first transmission path usage rate RuA.

The second transmission path interface 29-B is used as a communications interface using the second transmission path Lb for calculating a usage rate of a communication route with the network 12-B, and generating a second transmission path usage rate RuB.

The information transmitting and receiving section 21 is connected to the first transmission path interface 29-A, the second transmission path interface 29-B, the distribution request processing section 22, and the send-out control section 28. The information transmitting and receiving section 21 exchanges a distribution command Cd associated with the request for distributing the content D to the distribution request processing section 22. Then, based on the distribution command Cd, the content D supplied from the send-out control section 28 is outputted to either one of the first transmission path interface 29-A and the second transmission path interface 29-B.

The send-out state managing section 31 is connected to the first transmission path interface 29-A, the second transmission path interface 29-B, and the send-out control section 28. Based on the first transmission path usage rate RuA and the second transmission path usage rate RuB coming from the first transmission path interface 29-A and the second transmission path interface 29-B, respectively, the send-out state managing section 31 generates transmission path interface managing information Iru for controlling the use of the first transmission path interface 29-A and the second transmission path interface 29-B, and outputs the generated information to the send-out control section 28. That is, the send-out state managing section 31 can manage the usage rate of the content holding section 32, the distribution time, or the distribution delayed time that are calculated by the send-out control section 28.

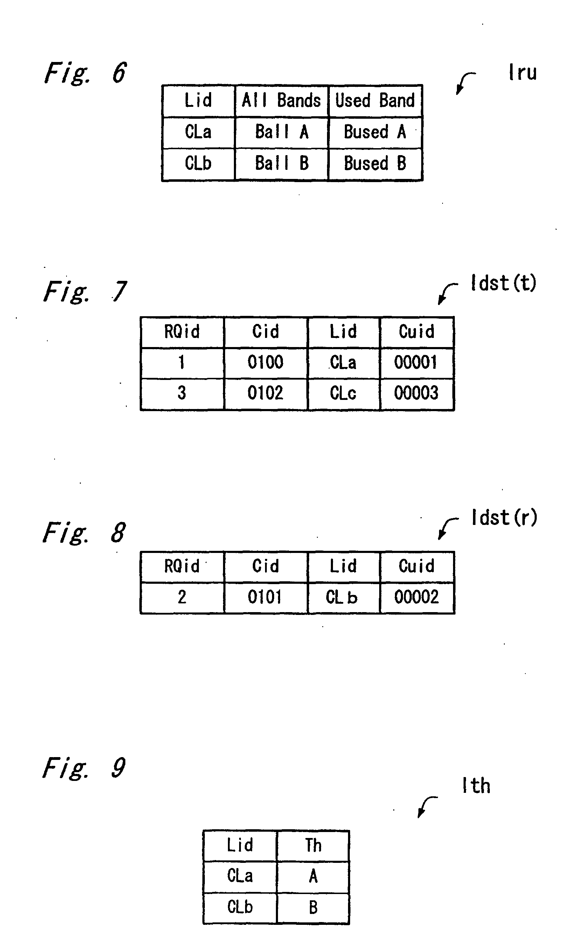

Illustrated in FIG. 6 is one example of the transmission path interface managing information Iru generated by the send-out state managing section 31. In the drawing, illustrated are "all bands" available to transmission paths of two types having transmission path identifiers Lid of CLa and CLb, respectively, and "used band" currently being used out of "all bands". In "all bands" section, "Ball A" denotes "Band all A", meaning all bands of the transmission path L (CLa). Similarly, "Ball all B" means all bands of the transmission path L (CLb). Furthermore, in "used band" section, "Bused A" means a band being used out of all bands of the transmission path L (CLa), while "Bused B" means a band being used out of all bands of the transmission path L (CLb).

The distribution destination managing section 30 holds and manages content distribution condition information Idst having a distribution destination and an identifier representing the content for preselected distribution as a set, which is inputted from the distribution request processing section 22 as information required for preselected distribution. Illustrated in FIG. 7 is one example of content distribution condition information Idst(t) for preselected distribution. In the drawing, prepared for every request ID (IRid) are an ID (Cid) of the content for preselected distribution, an ID (Lid) of the transmission path L to be used, and an ID (CUid) of the client, that is, the distribution destination, as a set. Similarly, exemplarily illustrated in FIG. 8 is content distribution condition information Idst(r) as to the content for preselected distribution.

The threshold holding section 24 holds distribution threshold information Ith containing: the usage rate of the content holding section 32, the distribution time, or the distribution delayed time; a threshold of the usage rate of the communications route with the network 12-A; and a threshold of the usage rate of the communications route with the network 12-B. The contained information serve as references for determining whether the content can be instantly distributed. Note that each distribution threshold Th is supplied to the on-demand distribution determining section 23.

Illustrated in FIG. 9 is one example of the distribution threshold Ith managed by the threshold holding section 24. The distribution threshold Ith contains, for every transmission path, information that serves as a reference for determining whether there is any usable band available for instant distribution. In the drawing, the thresholds Th indicating that two types of transmission paths L whose ID (Lid) are CLa and CLb are A and B, respectively.

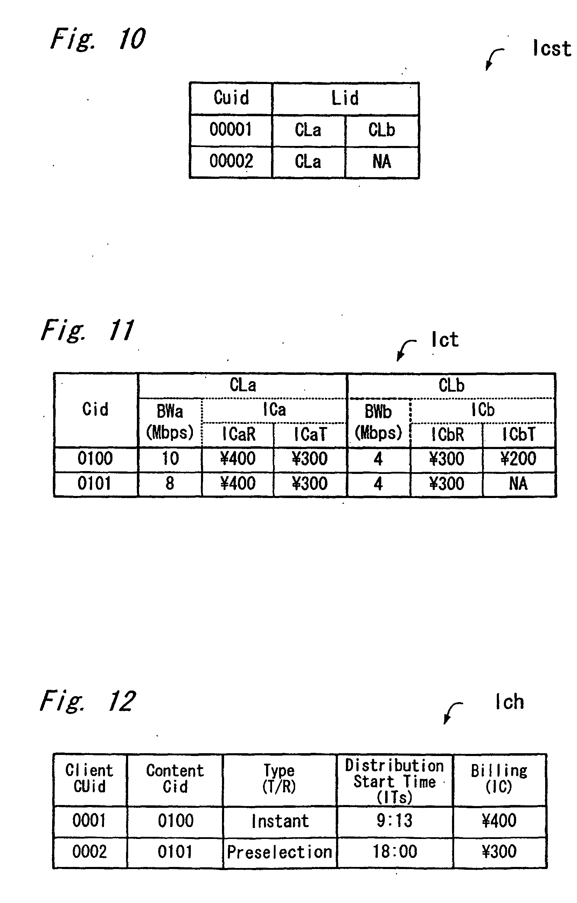

The client information managing section 25 generates and manages client information Icst required for content distribution, fee collection, etc., such as information about transmission paths available to the user (terminal device 12p), based on the received report information Ii included in the distribution request information Rp of the user condition IDu transmitted from the terminal device 12p via the first transmission path interface 29-A, the second transmission path interface 29-B, the information transmitting and receiving section 21, and the distribution request processing section 22. Illustrated in FIG. 10 is one example of the client information Isct managed by the client information managing section 25. In the example illustrated in the drawing, for two users whose client IDs (Cid) are 0001 and 0002, communications transmission paths respectively available thereto (CLa, CLb) are generated and managed based on the report information Ii.

The content information managing section 26 previously stores distribution information Ict for every distribution type (transmission path L, distribution time) of the content D providable by the distribution apparatus 11p. Then, in response to the distribution request Irq from the distribution request processing section 22, billing information IC corresponding to the distribution condition is read out of the stored distribution information Ict for output to the billing managing section 27.

Illustrated in FIG. 11 is one example of the distribution information Ict managed by the content information managing section 26. In the drawing, in the drawing, exemplarily illustrated are distribution fees ICar and ICbr for instant distribution and distribution fees ICat and ICbt for preselected distribution when two types of contents whose content IDs (Cid) are 0100 and 0101 are distributed by using the communications path A (CLa) and the communication path B (CLb), respectively. In the example, the first transmission path La has two types of bands BWa, 10Mbs and 8Mbs, 10Mbs available to the first content (Cid:0100) and 8Mbs available to the second content (Cid:0101).

Also, as to the first transmission path La, irrespectively of the band and the content, the instant distribution fee (ICaR) is fixed at ¥400 and the preselected distribution fee (ICaT) is fixed at ¥300. As to the second transmission path Lb, on the other hand, the band is fixed at 4Mbs, the instant distribution fee (ICaR) is fixed at ¥300. To the first content (Cid:0100), the preselected distribution fee (ICbT) has been set at ¥200. To the second content (Cid:0101), however, no preselected distribution fee (ICbT) has been set. This means that no preselected distribution service for the second content is provided in the second transmission path Lb.

Based on the billing information IC outputted from the content information managing section 26, the billing managing section 27 manages the billing information for every client, and generates client billing information Ich for output to the distribution request processing section 22.

Illustrated in FIG. 12 is one example of the client billing information Ich managed by the billing managing section 27. In the client billing information Ich, for every client Cid, the identifier Cid of the distributed content, the distribution type (T), a distribution start time (ITs), and a charge (IC) are specified. In the example, it is recoded for the user whose CUid is 0001 that the service of instant distribution of a content whose Cid is 0100 was carried out at 9: 13 a.m., and its charge is ¥400. For the user whose CUid is 0002, it is recorded that the service of preselected distribution of a content whose Cid is 0101 was carried out at 6:00 p.m., and its charge is ¥300.

The on-demand distribution determining section 23 has a function of comparing the usage ratio of the content holding section 32, the distribution time, or the distribution delayed time that are managed by the send-out state managing section 31 with the distribution threshold Th held by the threshold holding section 24, and also a function of comparing therewith the transmission path interface managing information Iru including the usage ratio of the communications route to the network 12-A managed by the send-out state managing section 31. That is, the on-demand distribution determining section 23 compares the distribution threshold Th supplied by the threshold holding section 24 with the transmission path interface managing information Iru received from the send-out state managing section 31 for calculating, based on all transmission loads on the transmission paths L commonly available available with the user (terminal device 12p) at this moment and the processing loads on the distribution apparatus 11p, a time required for the start of distribution, and generates comparison result information Ij. This comparison result information Ij is outputted to the distribution request processing section 22.

The distribution request processing section 22 determines, based on the comparison result information Ij supplied by the on-demand distribution determining section 23, whether the content can be instantly distributed (instant distribution is possible). If it is determined that instant distribution is possible, the distribution request processing section 22 then requests the identifier of the communications route available for distribution, instant distribution content billing information Icht, and preselected distribution content billing information Icht indicating the fee for preselected distribution. Note that instant distribution content billing information Ichr and the preselected distribution content billing information Icht are collectively called the billing information Ich.

If it is determined that the content cannot be instantly distributed, the distribution request processing section 22 sets preselected distribution or delayed distribution based on the identifier of the communications route commonly available with the user and the calculated time required for the start of distribution, and also outputs, to the information transmitting and receiving section 21, a content transmission request Rdc for requesting transmission of the content billing information to the distribution-requesting terminal device 12p.

When the request for instant content distribution from the information transmitting and receiving section 21 is received, the send-out control section 28 is requested to send out the requested content D to the requesting terminal device 12p.

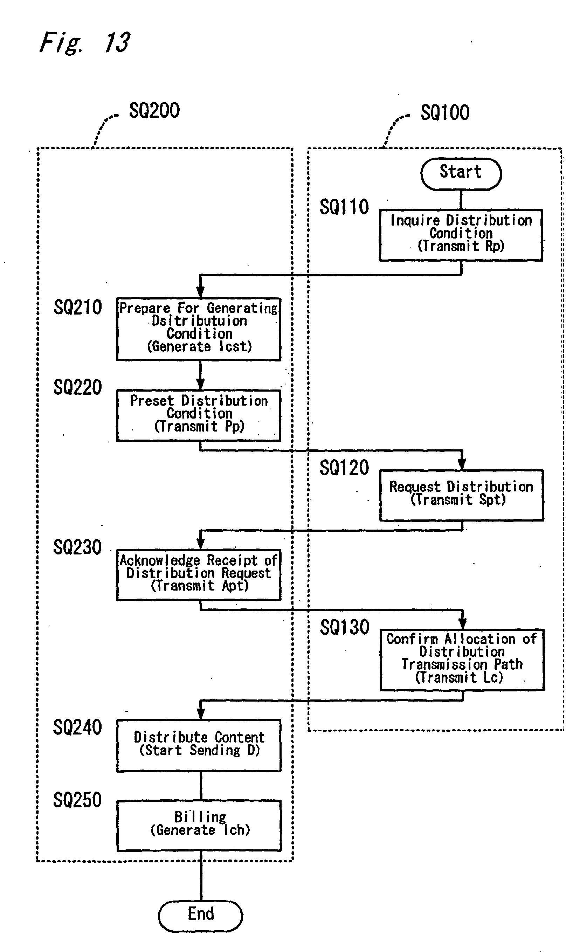

With reference to a sequence chart shown in FIG. 13, described is a content distribution operation in the above-described distribution system DCp. First, a content distribution sequence in the distribution system DCp is broadly divided into a distribution request sequence SQ100 to be performed by the user operating the terminal device 12p and a distribution sequence SQ200 to be performed by the distribution apparatus 11p at the content provider side. The distribution request sequence SQ100 includes a distribution condition inquiring sequence SQ110, a distribution requesting sequence SQ120, and a distribution transmission path allocation confirming sequence SQ130. The distribution sequence SQ200 includes, on the other hand, a distribution condition preparing sequence SQ210, a distribution condition presenting sequence SQ220, a distribution request reception acknowledging sequence SQ230, a content distributing sequence SQ240, and a billing sequence SQ250.

In the distribution system DCp, the content distribution sequence is started by, first in the distribution condition inquiring sequence SQ110, the user operating the terminal device 12p to generate distribution request information Rp (user condition IDu) for transmission to the distribution apparatus 11p. Specifically, the user operates the distribution request processing section 43 of the terminal device 12p to generate the user condition IDu for output to the control section 431. Based on the user condition IDu, the control section 431 instructs the protocol managing section 432 to request the distribution condition information.

The protocol managing section 432 obtains the client ID (CUid) from the terminal information managing section 433 and, based on a protocol version and the client ID, generates request information Ir as a distribution information request message. Then, the distribution request processing section 43 issues an instruction for transmitting the request information Ir via the first transmission path interface 41-A, for example. As a result, the request information Ir together with the report information Ii are transmitted to the distribution apparatus 11p as the distribution request information Rp.

In the distribution condition preparing sequence SQ210, based on the distribution request information Rp transmitted from the terminal device 12p, the distribution apparatus 11p generates client information Icst including information about the transmission paths commonly available with the user (terminal device 12p) and other information.

Then, in the distribution condition presenting sequence SQ220, the distribution apparatus 11p generates distribution condition information Pp based on the client information Icst. This distribution condition information Pp is then transmitted to the terminal device 12p. With this, the conditions of the content distribution service providable to the user are presented.

Specifically described below is processing in the distribution condition preparing sequence SQ210 and the distribution condition presenting sequence SQ220. In the distribution condition inquiring sequence SQ110, the distribution request information Rp (user condition IDu) transmitted from the terminal device 12p goes through the first transmission path interface 29-A (corresponding to the first transmission path interface 41-A) of the distribution apparatus 11p and the information transmitting and receiving section 21 to the distribution request processing section 22.

The distribution request processing section 22 supplies the report information Ii included in the distribution request information Rp to the client information managing section 25 for generating the client information Icst. Furthermore, the distribution request processing section 22 reports the content ID (Cid) and the client ID (Cuid) to the on-demand distribution determining section 23 for inquiring about whether instant distribution is possible for every transmission path L to the user. Based on the client ID (CUid), the on-demand distribution determining section 23 searches the client information Icst read from the client information managing section 25 for a transmission path(s) commonly available with the user. The on-demand distribution determining section 23 further obtains the billing information ICa as to the content ID (Cid) from the content information managing section 26 to determine whether instant distribution is possible for every available transmission path L.

In the on-demand distribution determining section 23, determination about whether instant distribution is possible in the first transmission path La is made according to the following equation (1), while determination about whether instant . distribution is possible in the second transmission path Lb is made according to the following equation (2).

$$(\text{Ball A} \times \text{Th, A - Bused A}) \geqq \text{the band of the requested content in the first transmission path La} \qquad (1)$$

$$(\text{Ball B} \times \text{Th, B - Bused B}) \geqq \text{the band of the request content in the second transmission path Lb} \qquad (2)$$

If the above equation (1) and equation (2) are both true, it is determined that instant distribution is possible.

Based on the above-described determination, the comparison result information Ij is generated. Thus, for every transmission path L available to the user, the determination result is reported to the distribution request processing section 22.

The distribution request processing section 22 determines the version of the protocol included in the user condition IDu, and checks, based on the determined version, the distribution type of the terminal device 12p (whether instant distribution is possible, whether preselected distribution is possible, and whether a plurality of transmission paths L are available). The distribution type of the distribution apparatus 11p falls into either one of the following two cases.

In Case 1, the terminal device 12p can fixedly use a single transmission path, and cannot freely select a plurality of transmission paths L for use.

In Case 2, the terminal device 12p can freely select a plurality of transmission paths for use. Furthermore, the terminal device 12p in Case 1 and Case 2 falls in either one of the following three categories, respectively.

The terminal device 12p in Case 1 falls in either one of three categories as follows.

In Category 1-1, only instant distribution is possible. In Category 1-2, preselected distribution is possible when instant distribution is not possible. In Category 1-3, both instant distribution and preselected distribution are possible. Described below is processing of the distribution request processing section 22 with respect to the terminal device 12p in each category.

In category 1-1, the terminal device 12p can receive only instant distribution. Therefore, when the comparison result information Ij indicates that instant distribution is possible, the distribution request processing section 22 reports the following as the distribution condition information Pp: the content ID (Cid), the client ID (CUid), and a purchase identifier (Pid(r)) and billing information (ICa(r)) set for instant distribution. When the comparison result information Ij indicates that instant distribution is not possible, the distribution request processing section 22 reports the content ID (Cid), the client ID (CUid), and an indication of distribution-disable as the distribution condition information Pp.

In Category 1-2, the terminal device 12p can receive preselected distribution when instant distribution is not possible. Therefore, when the comparison result information Ij indicates that instant distribution is possible, the distribution request processing section 22 reports the following as the distribution condition information Pp: the content ID (Cid), the client ID (CUid), a purchase identifier (Pid(r)) and billing information ICa(r) set for instant distribution, and an indication of instant distribution. When the comparison result information Ij indicates that instant distribution is not possible, on the other hand, the distribution request processing section 22 reports the following as the distribution condition information Pp: the content ID (Cid), the client ID (CUid), a purchase identifier (Pid(t)) and billing information (ICa(t)) set for preselected distribution, and an indication of preselected distribution.

In Category 1-3, the terminal device 12p can receive both instant distribution and preselected distribution. Therefore, when the comparison result information Ij indicates that instant distribution is possible, the distribution request processing section 22 reports the following as the distribution condition information Pp: the content ID (Cid), the client ID (CUid), the purchase identifier (Pid(r)) and the billing information ICa(r) set for instant distribution, and an indication of instant distribution. Furthermore, for preselected distribution, the distribution request processing section 22 reports the content ID (Cid), the client ID (CUid), the purchase identifier (Pid(t)), the billing information ICa(t), and an indication of preselected distribution. Note that, as has been described with reference to FIGS. 7, 8, and 11, the purchase identifier (Pid(t)) and the billing information ICa(t) to be reported for preselected distribution are set separately from the purchase identifier (Pid(r)) and the billing information ICa(r) to be reported for instant distribution.

The terminal device 12p that can freely select one of the plurality of transmission paths L in Case 2 also falls into one of three categories as follows.

In Category 2-1, only instant distribution is possible. In Category 2-2, preselected distribution is possible when instant distribution is not possible. In Category 2-3, both instant distribution and preselected distribution are possible. Described below is processing of the distribution request processing section 22 to the terminal device 12p in each category.

In Category 2-1, the terminal device 12p can receive only instant distribution. Therefore, when the comparison result information Ij indicates that instant distribution is possible, the distribution request processing section 22 reports the following as the distribution condition information Pp: the content ID(Cid) and the client ID (CUid); a purchase identifier (Pid(r1)) and billing information (ICa(rl)) set for instant distribution as to the first transmission path La; and a purchase identifier (Pid(2r)) and billing information (ICa(2r)) set for the instant purpose as to the second transmission path Lb.

On the other hand, in Category 2-1, when the comparison result information Ij indicates that only one of the first transmission path La and the second transmission path Lb allows instant distribution, reported are the purchase identifier (Pid(r)) and the billing information (ICa(r)) set for instant distribution as to the allowing transmission path L.

In Category 2-2, the terminal device 12p can receive preselected distribution when instant distribution is not possible. Therefore, when the comparison result information Ij indicates that instant distribution is possible, the distribution request processing section 22 reports the following as the distribution condition information Pp: the content ID (Cid) and the client ID (CUid); the purchase identifier (Pid(1r)) and the billing information (ICa(1r)) set for instant distribution as to the first transmission path La; and the purchase identifier (Pid(2r)) and the billing information (ICa(2r)) set for instant distribution as to the second transmission path Lb.

On the other hand, in Category 2-2, when the comparison result information Ij indicates that only one of the first transmission path La and the second transmission path Lb allows instant distribution, reported as to the allowing transmission path L are the purchase identifier (Pid(r)) and the billing information (ICa(r)) set for instant distribution, and an indication of instant distribution. Reported as to the transmission path L that does not allow instant distribution are the purchase identifier (Pid(t)) and the billing information (ICa(t)) set for preselected distribution, and an indication of preselected distribution.

Furthermore, when the comparison result information Ij indicates that both of the first transmission path La and the second transmission path Lb do not allow instant distribution, the distribution request processing section 22 reports the following as the distribution condition information Pp: the content ID (Cid) and the client ID (CUid); the purchase identifier (Pid(1t)) and the billing information (ICa(1t)) set for preselected distribution; and the purchase identifier (Pid(2t)) and the billing information (ICa(2t)) set for preselected distribution.

In Category 2-3, the terminal device can receive both of instant distribution and preselected distribution. When the comparison result information Ij indicates that instant distribution is possible, the distribution request processing section 22 reports the following as the distribution condition information Pp: the content ID (Cid) and the client ID (CUid); a content ID (Cid(1r)), a client ID (CUid(1r)), the purchase identifier (Pid(1r)) the billing information (ICa(1r)) set for instant distribution; an indication of instant distribution; and further the purchase identifier (Pid(1t)) the billing information (ICa(1t)), and the purchase identifier (Pid(2t)) and the billing information (ICa(2t)) set for preselected distribution; and an indication of preselected distribution.

On the other hand, in Category 2-3, when the comparison result information Ij indicates that only one of the first transmission path La and the second transmission path Lb allows instant distribution, reported are the purchase identifier (Pid(t)) and the billing information (ICa(t)) set for instant distribution as to the allowing transmission path L, and an indication of instant distribution. As to the transmission path L that does not allow instant distribution, reported are the purchase identifier (Pid(t)) and the billing information (ICa(t)) set for preselected distribution, and an indication of preselected distribution.

When the comparison result information Ij indicates either of the first transmission path La and the second transmission path Lb does not allow instant distribution, the distribution request processing section 22 reports the following as the distribution condition information Pp: the content ID (Cid), the client ID (CUid), the purchase identifier (Pid(1t)) and the billing information (ICa(1t)) set for preselected distribution, the purchase identifier (Pid(2t)) and the billing information (ICa(2t)) set for preselected distribution, and an indication of preselected distribution.

Returning to FIG. 13, in the distribution requesting sequence SQ120, the user receives, at the terminal device 12p, the above-stated distribution condition information Pp transmitted from the distribution apparatus 11p and checks, at the distribution condition checking section 44, the distribution conditions for selecting a desired distribution condition and generating preselected distribution order information Spt. Then, by transmitting this preselected distribution order information Spt to the distribution apparatus 11p, distribution of the desired content D is requested to the content provider.

Referring back to the above-described FIG. 3, described is generation of the preselected distribution order information Spt at the terminal device 12p. The distribution condition information Pp (distribution condition information IDs) transmitted from the distribution apparatus 11p is inputted via the first transmission path interface 41-A, for example, and the information transmitting and receiving section 42 to the protocol managing section 432 of the distribution request processing section 43. The protocol managing section 432 reports the following information included in the received distribution condition information Pp to the control section 431: the distribution transmission path identification information ILd, the distribution type identification information IFd, the scheduled distribution timing ITd, the distribution content identification information ICd, and the distribution fee information ICp.

Based on the information (Pp) inputted from the protocol managing section 432, the control section 431 causes the distribution condition checking section 44 to display a distribution scheme list. The user refers to this distribution scheme list to determine which one to request for distribution, and operates the distribution condition checking section 44 to select the purchase identifier (Pid) corresponding to the distribution request.

From the distribution condition checking section 44, an operation signal indicating a purchase identification (RQid) of the user is outputted to the control section 431 of the distribution request processing section 43. The control section 431 detects the selected purchase identifier (Pid), and reports it to the protocol managing section 432. Based on the purchase identifier (Pid) and the client ID (CUid), the protocol managing section 432 generates preselected distribution order information Spt, and outputs it to the distribution apparatus 11p via the information transmitting and receiving section 42 and the first transmission path interface 41-A or the second transmission path interface 41-B.

Returning to FIG. 13, in the distribution request reception acknowledging sequence SQ230, the distribution apparatus 11p generates preselected distribution order reception information Apt based on the preselected distribution order information Spt transmitted from the terminal device 12p. Then, by transmitting this preselected distribution order reception information Apt to the terminal device 12p, the content provider acknowledges receipt of the content distribution request from the user. Note that, in the case of preselected distribution, the distribution apparatus 11p transmits the distribution transmission path allocation request ILr to the terminal device 12p designated by the user a predetermined time ahead of the selected scheduled distribution timing ITs, requesting to check whether any transmission path L to be used by the user for receiving distribution of the content D has been allocated. Note that, as described above, the distribution transmission path allocation request ILr may be omitted in the case of instant distribution.

Referring back to FIG. 5, described in detail is the operation of the distribution apparatus 11p in the distribution request reception acknowledging sequence SQ230. The preselected distribution order information Spt (user condition IDu) transmitted from the terminal device 12p goes through the first transmission path interface 29-A or the second transmission path interface 29-B and the information transmitting and receiving section 21 to the distribution request processing section 22. The distribution request processing section 22 detects the purchase identifier (Pid) and the client ID (CUid) in the received preselected distribution order information Spt to determine which distribution has been requested by the user, instant distribution or preselected distribution.

When it is determined that the user has requested preselected distribution, the distribution request processing section 22 outputs the content distribution condition information Idst(t) to the distribution destination managing section 30 for registering preselection. Note that the content distribution content information Idst(t) has been described with reference to FIG. 7. When it is determined that the user has requested instant distribution, on the other hand, the distribution request processing section 22 outputs the content distribution condition information Idst(r) to the distribution destination managing section 30 for registering instant distribution. Note that the content distribution condition information Idst(r) has also been described with reference to FIG. 8. Then, after registering distribution in the above-described manner, the distribution request processing section 22 generates preselected distribution order reception information Apt (distribution condition information IDs; distribution content information Id) for output to the send-out control section 28. The send-out control section 28 transmits the preselected distribution order reception information Apt to the terminal device 12p via either one of the first transmission path interface 29-A and the second transmission path interface 29-B.

Returning to FIG. 4, in the distribution transmission path allocation confirming sequence SQ130, in response to the distribution transmission path allocation request ILr included in the preselected distribution order reception information Apt transmitted from the distribution apparatus lip, after allocation of the transmission path L for the terminal device 12p and its confirmation, distribution transmission path allocation confirmation Lc is transmitted to the distribution apparatus 11p. The operation of the terminal device 12p in this sequence is described in detail. The preselected distribution order reception information Apt (distribution condition information IDs; distribution content information Id) transmitted from the distribution apparatus 11p reaches the protocol managing section 432. The order information, which is temporarily held when the preselected distribution order information Spt is generated in the above-described distribution requesting sequence SQ120, includes the purchase identifier (Pid), the selected distribution transmission path information ILs, the preselected and/or background distribution (IFs), the selected distribution fee information ICs, etc. The protocol managing section 432 checks the order information (Spt) against the received preselected distribution order reception information Apt including the purchase identifier (Pid), the client ID (Cuid), and the request ID (RQid)). Then, the request ID (RQid), the transmission path identifier Lid, an indication of preselected distribution, the billing information IC are reported to the control section 431.

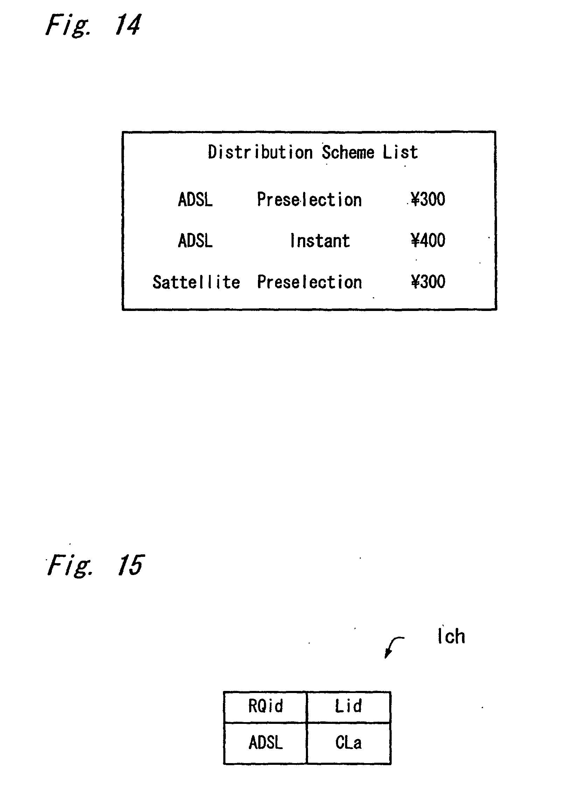

Based on the request ID (RQid), the transmission path identifier Lid, the indication of preselected distribution, and the billing information IC reported by the protocol managing section 432, the control section 431 causes the distribution condition checking section 44 to display the received distribution request. Note that, in the case of preselected distribution, the request ID (RQid) and the transmission path Lid are stored in the preselection information managing section 434. Illustrated in FIG. 15 is one example of the request ID (RQid) and the transmission path identifier Lid managed by the preselected information managing section 434.

Then, when the distribution transmission path allocation request ILr transmitted from the distribution apparatus 11p is received by the protocol managing section 432, the corresponding request ID (RQid) is reported to the control section 431. The control section 431 confirms the existence of the request ID (RQid) reported to the preselection information managing section 434. If the existence has been confirmed, the protocol managing section 432 is instructed to transmit the distribution transmission path allocation confirmation Lc, and also the content holding section 46 is instructed to store the content D to be distributed.

Returning to FIG. 5, in the content distributing sequence SQ240, the distribution apparatus 11p responds to the distribution transmission path allocation confirmation Lc transmitted from the terminal device 12p to transmit the content D to the terminal device 12p. That is, when the distribution transmission path allocation confirmation Lc transmitted from the terminal device 12p is received, the distribution request processing section 22 detects the request ID (RQid) in the distribution transmission path allocation confirmation Lc. With the request ID (RQid), the distribution request processing section 22 searches the distribution destination managing section 30 for reading out the client ID (CUid), the content ID (Cid), and the distribution type information (IF) for reporting to the billing managing section 27, thereby making billing management associated with the upcoming content distribution effective.

Then, the distribution request processing section 22 reports to the send-out control section 28 the content ID (Cid) of the content to be distributed and the transmission path L for use. The send-out control section 28 instructs the information transmitting and receiving section 21 to carry out distribution via the designated transmission path L. The send-out state managing section 31 updates the used band of the transmission path L to be used.

Then, in the billing sequence SQ250, at the time when transmission of the content D is complete, client billing information Ich is generated for charging the user for the content fee, and then the processing ends. Note that the content D to be distributed is provided with marks indicating its start and end, respectively. By detecting these marks, the content storage processing section 45 controls the operation of storing the content D performed by the content holding section 46.

When it is detected that the content D has been completely stored in the content holding section 46, the content storage processing section 45 reports the request ID (RQid) and an indication of store-completed to the control section 431.

The control section 431 then requests the preselection information managing section 434 to delete the request ID (RQid). and the preselection information managing section 434 follows the instruction. In this way, content distribution in the distribution system DCp ends.

Note that, as described above, as long as the information of the user (terminal device 12p) is registered and managed by the content provider, the report information Ii at the time of subsequent distribution requests or inquiries may only include the client ID (Cuid).

INDUSTRIAL APPLICABILITY

As described above, in this invention, it is possible to set various distribution conditions for each transmission path commonly available between the user and the content provider according to the degree of congestion, thereby averaging loads on resources of the content distribution system and effectively using the resources.

**Claims**

1.    A digital content distribution system in which a digital content is exchanged between a first digital transmitting and receiving device capable of transmitting and receiving digital data via a first plurality of transmission routes and a second digital transmitting and receiving device capable of transmitting and receiving the digital data via a second plurality of transmission routes,

the first digital transmitting and receiving device comprising:

first transmission path identification information generating means for generating first transmission path identification information indicating each of the first plurality of transmission paths; and
first transmitting means for transmitting the first transmission path identification information to the second digital transmitting and receiving device via an arbitrary one of the first plurality of transmission paths, and
the second digital transmitting and receiving device comprising:

second transmission path identification information generating means for generating second transmission path identification information by detecting transmission paths common to the first plurality of transmission paths in the second plurality of transmission paths based on the first transmission path identification information; and
distribution condition setting means for setting a distribution condition of the digital content to each of the common transmission paths.

2. The digital content distribution system according to claim 1, wherein
the second digital transmitting and receiving device includes
send-out information managing means for managing send-out information including, for each of the common transmission paths, a distribution band, a distribution time, and a distribution delayed time of the digital content to be distributed;
on-demand distribution determining means for comparing the send-out information with a threshold; and
distribution request processing means for transmitting, based on the comparison result information, a plurality of timing types for distributing the digital content and distribution billing information for each of the common transmission paths.

3. The digital content distribution system according to claim 3, wherein
the send-out information managing means determines whether instant distribution of the digital content is possible over the common transmission paths.

# Fig. 1

| Signal | | Information to be exchanged | Direction |
|---|---|---|---|
| Ipt | Rp | Distribution Request Information (Available Infrastructure Information) | 11p ← 12p |
| | Pp | Present Distribution Conditions For Every Distribution Type | 11p → 12p |
| | Spt | Preselected Distribution Content Order Information (Select Distribution Type, and Order) | 11p ← 12p |
| | Apt | Preselected Distribution Order Reception Information (Distribution Schedule) | 11p → 12p |
| | L c | Allocated Distribution Transmission Path | 11p ← 12p |
| | D | Content | 11p → 12p |

Ipt
( p, pp, Spt, Apt)

Dcp

La

D

11p

**Content Distribution Apparatus**

12p

**Terminal Device**

Lb

D

Ip (Ap)

EP 1 303 089 A1

# Fig. 2

| Signal | Information to be exchanged | Direction |
|---|---|---|
| Rp | Distribution Request Information (Available Infrastructure Information) | 11p ← 12p |
| Pp | Present Distribution Conditions For Every Distribution Type | 11p → 12p |
| Spr | Instant Distribution Order Reception Acknowledging Information (Select Distribution Type, and Order) | 11p ← 12p |
| Apr | Instant Distribution Order Reception Acknowledging Information (Distribution Schedule) | 11p → 12p |
| Rr | Receive Ready Request | 11p → 12p |
| D | Content | 11p → 12p |

Ipr

Ipr ( p, pp, Spr)

Dcp

La

D

11p

Content Distribution Apparatus

12p

Terminal Device

D

Lb

Ip (Apr)

EP 1 303 089 A1

Fig. 3

**Fig. 4**

| Preselected Distribution Order And Order Reception Information Ipt (Distribution Apparatus 11p←—→Terminal Device 12p) | | | | | |
|---|---|---|---|---|---|
| User Condition IDu (Terminal Device 12p→Distribution Apparatus 11p) | | | | Distribution Condition Information IDs (Distribution Apparatus 11p →Terminal Device 12p) | |
| Distribution Request Information Rp | | Preselected Distribution Order Information Spt | Distribution Transmission Path Allocation Confirmation Lc | Distribution Condition Information Rp | Preselected Distribution Order Reception Infomation APt |
| Report Information Ii | Request Information Ir | Selected Distribution Type Information IFs | | Distribution Transmission Path Identification ILd | Received Distribution Condition Information IAc |
| User Identification Information Iu | Requestee Identification Information Ird | Distribution Distribution Transmission Path ILs | | Distribution Type Identification Information IFd | |
| User Terminal Identification Information Tu | Connection Transmission Path Identification Irl | Selected Scheduled Distribution Timing ITs | | Scheduled Distribution Timing ITd | Distribution Transmission Path Allocation Request ILr |
| | | Selected Content Information ICs | | Distribution Content Identification Information ICd | |
| User Transmission Path Identification Information ILu | Destribution Condition Request Irc | Selected Distribution Fee Information ICs | | Distribution Fee Information ICp | |

Fig. 5

*Fig. 6*

Iru

| Lid | All Bands | Used Band |
|-----|-----------|-----------|
| CLa | Ball A | Bused A |
| CLb | Ball B | Bused B |

*Fig. 7*

Idst(t)

| RQid | Cid | Lid | Cuid |
|------|------|-----|-------|
| 1 | 0100 | CLa | 00001 |
| 3 | 0102 | CLc | 00003 |

*Fig. 8*

Idst(r)

| RQid | Cid | Lid | Cuid |
|------|------|-----|-------|
| 2 | 0101 | CLb | 00002 |

*Fig. 9*

Ith

| Lid | Th |
|-----|-----|
| CLa | A |
| CLb | B |

*Fig. 10*

Icst

| Cuid | Lid | |
|------|-----|-----|
| 00001 | CLa | CLb |
| 00002 | CLa | NA |

*Fig. 11*

Ict

| Cid | CLa | | | CLb | | |
|-----|-----|-----|-----|-----|-----|-----|
| | BWa (Mbps) | ICa | | BWb (Mbps) | ICb | |
| | | ICaR | ICaT | | ICbR | ICbT |
| 0100 | 10 | ¥400 | ¥300 | 4 | ¥300 | ¥200 |
| 0101 | 8 | ¥400 | ¥300 | 4 | ¥300 | NA |

*Fig. 12*

Ich

| Client CUid | Content Cid | Type (T/R) | Distribution Start Time (ITs) | Billing (IC) |
|-------------|-------------|------------|-------------------------------|--------------|
| 0001 | 0100 | Instant | 9:13 | ¥400 |
| 0002 | 0101 | Preselection | 18:00 | ¥300 |

EP 1 303 089 A1

## Fig. 13

SQ200

SQ100

**Start**

SQ110 — Inquire Distribution Condition (Transmit Rp)

SQ210 — Prepare For Generating Dsitributuion Condition (Generate Icst)

SQ220 — Preset Distribution Condition (Transmit Pp)

SQ120 — Request Distribution (Transmit Spt)

SQ230 — Acknowledge Receipt of Distribution Request (Transmit Apt)

SQ130 — Confirm Allocation of Distribution Transmission Path (Transmit Lc)

SQ240 — Distribute Content (Start Sending D)

SQ250 — Billing (Generate Ich)

**End**

23

## Fig. 14

| Distribution Scheme List | | |
|---|---|---|
| ADSL | Preselection | ¥300 |
| ADSL | Instant | ¥400 |
| Sattellite | Preselection | ¥300 |

## Fig. 15

Ich

| RQid | Lid |
|---|---|
| ADSL | CLa |

## Fig. 16

| Signal | Information to be exchanged | Direction |
|---|---|---|
| c | Inquire Distribution Conditions | 11c ← 12c |
| pc | Present Distribution Conditions | 11c → 12c |
| Sc | Select Distribution Condition, and Order | 11c ← 12c |
| Ac | Acknowledge Receipt of Order (Report Distribution Schedule) | 11c → 12c |
| Wc | Display Receive Ready | 11c ← 12c |
| D | Distribute Content | 11c → 12c |

EP 1 303 089 A1

## INTERNATIONAL SEARCH REPORT

| | International application No. |
|---|---|
| | PCT/JP02/01217 |

**A. CLASSIFICATION OF SUBJECT MATTER**
Int.Cl$^7$  H04L12/56

According to International Patent Classification (IPC) or to both national classification and IPC

**B. FIELDS SEARCHED**

Minimum documentation searched (classification system followed by classification symbols)
Int.Cl$^7$  H04L12/56, G06F13/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 1-101759 A (NEC Corp.),<br>19 April, 1989 (19.04.89),<br>(Family: none) | 1<br>2,3 |
| X<br>A | JP 4-23647 A (Mitsubishi Electric Corp.),<br>28 January, 1992 (28.1.92),<br>(Family: none) | 1<br>2,3 |
| X<br>A | JP 5-284184 A (Canon Inc.),<br>29 October, 1993 (29.10.93),<br>(Family: none) | 1<br>2,3 |
| P,X<br>P,A | JP 2002-9971 A (NEC Corp.),<br>11 January, 2002 (11.01.02),<br>(Family: none) | 1<br>2,3 |

| ☒ Further documents are listed in the continuation of Box C. | ☐ See patent family annex. |
|---|---|

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 May, 2002 (13.05.02) | 28 May, 2002 (28.05.02) |

| Name and mailing address of the ISA/<br>    Japanese Patent Office | Authorized officer |
|---|---|
| Facsimile No. | Telephone No. |

Form PCT/ISA/210 (second sheet) (July 1998)

**INTERNATIONAL SEARCH REPORT**

| International application No. |
| --- |
| PCT/JP02/01217 |

C (Continuation). DOCUMENTS CONSIDERED TO BE RELEVANT

| Category* | Citation of document, with indication, where appropriate, of the relevant passages | Relevant to claim No. |
| --- | --- | --- |
| P,X<br>P,A | JP 2002-7245 A  (Hitachi Information Systems, Inc.),<br>11 January, 2002 (11.01.02),<br>(Family: none) | 1<br>2,3 |

Form PCT/ISA/210 (continuation of second sheet) (July 1998)